# EUROPEAN PATENT SPECIFICATION

(11) **EP 1 048 158 B1**
(45) Date of publication and mention of the grant of the patent: **08.06.2005**
(21) Application number: 99940177.1
(22) Date of filing: 09.08.1999
(51) Int. Cl.: H04L 29/06, H04L 12/28

(54) **PROVIDING A SERVICE IN A COMMUNICATION SYSTEM**
DIENSTABGABE IN EINEM KOMMUNIKATIONSSYSTEM
PRESTATION D'UN SERVICE DANS UN SYSTEME DE COMMUNICATION

(30) Priority: 27.08.1998 GB 9818585
(43) Date of publication of application: 02.11.2000
(73) Proprietor: Motorola Limited, Basingstoke, Hampshire RG22 4PD (GB)
(72) Inventor: DELLAVERSON, Lou, Barrington, IL 60010 (US); WATSON, Andrew, Portsmouth, Hampshire PO6 4UF (GB); WRAY, Antony, Basingstoke, Hampshire RG24 8RR (GB)
(74) Representative: Jepsen, Rene Pihl
(86) International application number: PCT/EP1999/005765
(87) International publication number: WO 2000/013390

(56) References cited:
- EP-A- 0 789 471
- WO-A-97/21294
- WO-A-97/24879
- WO-A-98/04088
- WO-A-98/11487
- US-A- 5 233 628
- US-A- 5 675 507

## Description

### Field of the Invention

The present invention relates to a method of providing a service in a communication system, wherein the service is provided by a content provider to a user. The present invention also relates to an apparatus for providing a service in a communication system, wherein the service is provided by a content provider to a user. The invention is applicable to but not limited to a cellular radio communication system such as the Universal Mobile Telecommunication System (UMTS) currently under standardisation.

### Background of the Invention

Diverse information services currently exist. The content of such information services are typically provided by a content provider, and transmitted to end users by means of some communication network. The communication network is often termed an information highway, and can be for example the internet or other electronic communications routes. Some examples of the type of information provided are news bulletins, travel routes, tourist advice, and so on. The content of such information services are often produced and transmitted in multimedia form.

Information highways or networks such as the internet consist of many sub-links connected in a nodal fashion, and the sub-links are formed of different specific types of communications link, for example digital telephone lines, ISDN lines and analogue telephone lines.

One type of communication link that is expected in future to play an increasing role as one link within information highways such as the internet is that provided by cellular radio communication systems, in particular in the case where the user or subscriber station is a mobile one. Presently established cellular radio communication systems include GSM systems (Global System for Mobile Communications).

An example of a cellular communication system is provided in Patent Cooperation Treaty patent application WO97/21294 which discloses a cellular communication system wherein communication parameters may be dynamically modified. The communication system uses direct sequence spread spectrum techniques and the communication parameter that may be modified include the PN code length, chipping rate and modulation technique.

The Universal Mobile Telecommunication System (UMTS) currently under standardisation is intended to provide a harmonised standard under which cellular radio communication systems will provide communications links suitable for transmitting a variety of data services such as information services as described above. It is expected that within the framework of developments such as UMTS or the like, cellular radio communication systems will play an increasing role in information highways such as the internet.

Generally speaking, the above described combination of information provision services and cellular radio communications systems along the lines of UMTS creates a broad range of new engineering problems and challenges. Indeed, one of the challenges faced is to envisage what new opportunities arise to provide users with additional facilities in the light of such a combination.

### Summary of the Invention

In the light of the above the present inventors have envisaged that the information services to be handled by systems such as UMTS, especially when in multimedia form, will be extremely diverse and each will have very different requirements with respect to communications parameters such as bandwidth, delay, and error rate. Similarly the present inventors have envisaged that different users will have different types of user station with differing capabilities. The present inventors have envisaged that some content providers will be able to offer users, i.e. customers, a choice as to what overall quality they wish to receive the information at, in terms of for example bandwidth, delay, and error rate, as a function of the price the customer wishes to pay.

The present inventors have further envisaged that since for some classes of information, e.g. news bulletins, there could be several sources of the same or similar information, the user could go to alternative content providers who could charge differently. Similarly, the present inventors have envisaged that cellular communication systems such as UMTS will involve respective arrangements of networks and sub-networks other than the simple linear arrangement of present systems such as GSM. In particular some networks will operate as access networks and others as core networks. Furthermore, the present inventors have envisaged that content providers will potentially be able to input their information at more than one input interface location of the respective network or interconnected networks.

The present inventors have also envisaged that within systems such as UMTS there will consequently be many routes to connect desired services. Depending on the bandwidths available, facilities, transmission distances and so on, the different cellular radio system network operators' costs will vary and hence the price to the user. The present inventors have envisaged therefore that overall there will be many combinations of content provider, networks, communications parameters and hence price.

The present invention advantageously implements means for the content provider and end user to take advantage of the characteristics described above and envisaged by the present inventors.

According to one aspect of the present invention, there is provided a method of providing a service in a communication system, wherein the service is provided by a content provider to a user, as claimed in claim 1.

According to another aspect of the invention, there is provided an apparatus for providing a service in a communication system, wherein the service is provided by a content provider to a user, as claimed in claim 12.

Further aspects of the invention are as claimed in the dependent claims.

The present invention provides the user with communication parameter options, which enable the user to select the level of service required as a function of price. Having made a selection, the user can advantageously be provided with a sample service corresponding to the selection for a limited duration. Additional specific advantages are apparent from the following description and figures.

### Brief Description of the Drawings

FIG. 1 is an illustration of a communication system in accordance with the present invention.
FIG. 2 is a schematic illustration of options provided in a preferred embodiment of the present invention.
FIG. 3 is a schematic illustration of a user station including an external device according to an embodiment of the present invention.

### Description of a Preferred Embodiment of the Invention

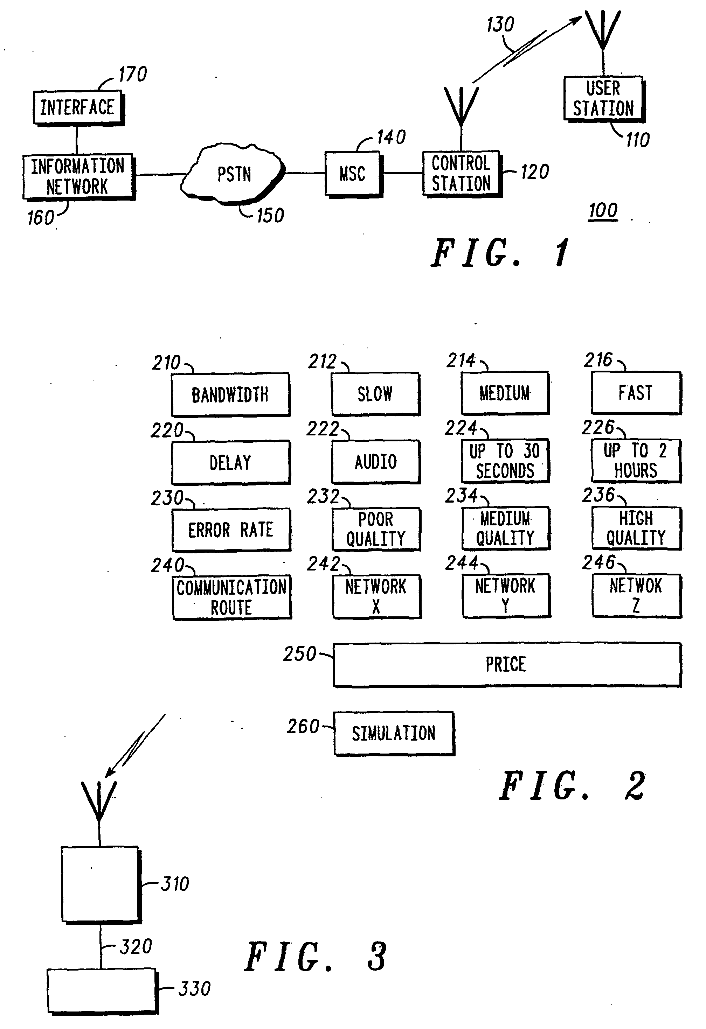

One particular embodiment of the invention is now described by way of example only. FIG. 1 shows a communication system 100 including a user station 110 and a control station 120. In this example, user station 110 is a mobile station and control station 120 consists of a base station system (BSS). A communication link established between BSS 120 and mobile station 110 is achieved by a radio link 130. The geographical area served by BSS 120 constitutes one cell of a cellular radio communication system.

In the present embodiment BSS 120 is connected to a mobile services switching centre (MSC) 140, which in turn is connected to a public switched telephone network (PSTN) 150. In the present embodiment PSTN 150 is connected to an information network 160, which in the present example consists of the internet. The present invention is however also applicable to other information networks, including restricted access networks and private networks.

In the present embodiment the content provider will provide an information service to a user via the route consisting of information network 160, PSTN 150, MSC 140, control station 120, radio link 130 and mobile station 110. The information, in multimedia form, is input to the information network via an interface 170. In the present example this interface consists of a modem and the content provider has produced the information content on a computer system.

In other embodiments interface 170 could be coupled directly to PSTN 150 or MSC 140. One scenario in which direct coupling into MSC 140 could occur would be when a particular content provider has a commercial agreement with a particular cellular radio communication network operator having control of or access to MSC 140.

Furthermore it is to be appreciated that the present invention is applicable to other varieties of network configurations and network components, arranged in different hierarchical, access and interconnection formats, in data handling communications systems such as UMTS. As such, the route via which the content provider will provide an information service to a user in other embodiments of the present invention will be chosen by the skilled person according to the particular characteristics of each overall network arrangement, and similarly the location of interface 170 will be chosen according to the particular characteristics of the overall network arrangement and the nature of the network components.

Similarly, it is to be appreciated that according to the specific network configuration and hierarchies, alternative system components will be incorporated serving different roles compared to control station 120, MSC 140 and PSTN 150. For example, networks such as UMTS ones may incorporate a public data network as opposed to a PSTN, and may incorporate a mobile packet switch as opposed to an MSC. Indeed the invention is applicable to any communication network, including overall networks consisting of sub-networks arranged in parallel and/or superimposed hierarchical logical format, in which a content provider is somewhere inputting an information service into the network arrangement and somewhere else in the overall network arrangement is located a user station by which a user is receiving or intending to receive the information service.

The method of the present embodiment includes the step of providing to the user a plurality of options related to values of at least one communications parameter to be used during the provision of service, for selection therefrom by the user.

In the present embodiment four communications parameters are included, namely
a) bandwidth,
b) delay,
c) error rate, and
d) communications route.
In the present embodiment each of these communications parameters, shown as items 210, 220, 230 and 240 in FIG. 2, are presented to the user on the display of the mobile station. Each of these communications parameters will have an effect on the quality of the service as perceived by the user. It is to be appreciated that the present invention applies to other embodiments in the form of other communications parameters which will have an effect on the quality of service as perceived by the user.

In the present embodiment, the user station comprises a mobile telephone 310 comprising means for communicating over a communication link 320 with an external device 330, as shown in FIG. 3. The external device can in principle be any device not an integral part of the mobile station, but is preferably a computer or an electronic organiser. Alternatively, the external device can be a smartcard, such as the Subscriber Identity Module (SIM) card used in cellular radio communications systems. The communication link 320 is preferably a fixed cable connection with appropriate interfaces built into the mobile station and the external device, but other communication links such as infrared or radio links can be used.

With respect to each of the above mentioned communications parameters a plurality of options related to the values thereof to be used during the provision of service, shown in FIG. 2 as items 212, 214 and 216 for bandwidth, items 222, 224 and 226 for delay, items 232, 234 and 236 for error rate, and items 242, 244 and 246 for communications route, are provided to the user, on the display of the mobile station. The options are presented in the present example to the user in the form of the readily appreciated terminology. In the case of bandwidth, the terms are "slow", "medium" and "fast", corresponding to the values 9.6kB, 200kB and 2Mb respectively. In the case of delay, the terms are "audio", "up to 30 seconds" and "up to 2 hours", where audio corresponds to 50 microseconds. In the case of error rate, the terms are "poor quality", "medium quality" and "high quality", corresponding to the values 10⁻⁴, 10⁻⁸ and 10⁻¹² respectively. In the case of communications route, the identity of different available communications networks are provided, in this example network X, network Y and network Z. It will be readily appreciated that presenting the options to the user in terms of everyday terminology provides benefits related to user friendliness, but it is noted that the relevant options could alternatively be presented in the form of the actual numerical values where appropriate, or in terms of both the user friendly terms and the real numerical values. It will also be appreciated that although the present example specifically cites three options for each parameter, in other examples any discrete number from 2 upward would be possible, moreover the number of options can be different for different respective parameters. Yet further, the plurality of options could be embodied in the form of a continuous range of values which would preferably be presented to the user in the form of slider bars.

The user selects the required options by use of conventional keyboard/screen interface means, for example by directing movement of a cursor by keyboard keys or mouse operation, and clicking, and so on.

In the present embodiment, a further feature can be that the options are provided as a function of price. The way in which the price function will be presented to the user will be chosen according to the particular situation under consideration. In the present example, a total price is provided, as shown at item 210 in FIG. 2. The price displayed initially is that corresponding to default options, the identity of which will be shown on the display by highlighting means. As the user selects particular alternative options, the price will adjust accordingly. How this is achieved is now explained.

In the present embodiment the function of price is determined using price information input by the content provider and/or price information input by one or more further service providers forming a communications route between the content provider and the user. Thus in the present example price information forming part of the overall price function will have been derived from the operator of PSTN 150, and from the operator of the cellular radio communication system comprising MSC 140 and control station 120, and this price information will have been transmitted to the content provider who will have chosen his own prices as a function of bandwidth, error rate etc., in the light of the provided for such options by the respective operators.

One possibility is that the function of price is determined using stored price information data obtained from an earlier provision of service employing the corresponding values of said at least one communications parameter. In other words the content provider will have produced price functions based on earlier actual prices that resulted for equivalent choices of options.

An alternative possibility is that the function of price is determined in real-time using currently applicable price information. Under this possibility the above mentioned operators as well as the content provider will each be providing ongoing input of price variables which are called upon as the user selects different options. Such a process is implemented by a pricing structure. Such a structure can be based on a packet billing system, which takes into account the demanded bandwidth, quality and delay, through which a test packet is sent through the network in order to determine the price which is assigned to it.

In the present embodiment, a further feature can be that simulation means are provided by the content provider for use by the user to carry out simulation of the service that would be provided according to an intended selection by the user. The availability of the simulation means is indicated to the user in association with provision of the plurality of options by means of an item on the display of the user station, such as shown as item 260 in FIG. 2. One possibility is that the user can acquire said simulation means via the communication system, in that software forming the simulation means is provided by the content provider for downloading by the user into his mobile station. An alternative would be that software forming the simulation means was pre-loaded onto the user's mobile station, or available for use in the mobile station by some other means.

The user implements use of the simulation means by further use of conventional keyboard/screen interface means, again for example by directing movement of a cursor by keyboard keys or mouse operation, and clicking, and so on.

In each case the software forming the simulation means on the present example will run a simulated version of the service to be provided at the corresponding functions selected by the user. This will enable the user to gauge whether his intended selection of options will in fact provide a service of appearance or content sufficient to meet his requirements.

It is noted that other simulation means other than software are possible, such as electronic circuits.

In the present embodiment, a further feature can be that, after selection by the user, a sample service corresponding to the selection is provided to the user for a limited duration. When the user has made a selection of the options, the actual service is provided, but only for a limited duration. Thus a means is provided for the user to gauge whether his intended selection of options will in fact provide a service of appearance or content sufficient to meet his requirements. This would also facilitate advantageous commercial choices for the content provider such as whether the service of limited duration is to be provided free of cost or at reduced cost. Also, the limited duration can consist of either a predetermined period of time or a predetermined cost, or some combination of these or other features that the skilled person would choose according to the particular system requirements. After the limited duration has expired, the user could request service to be continued or alternatively could select a different combination of options.

The above described features of simulation means and sample service may be provided by the content provider in the alternate, or also they could both be provided.

As described above, in the present embodiment, user station 110 consists of a mobile telephone 310 comprising means for communicating over a communication link 320 with an external device 330. However, alternatively, user station can consist of an electronic organiser module/mobile radio telephone combination unit, including a display and keyboard. Alternatively, the user station can be in effective mobile form by being constituted of a pci card plugged into a computer and serving as a radio modem. Similarly, a further alternative is a portable computer with a radio built in. Yet another alternative is a mobile telephone unit in which the user actions corresponding to those described earlier above are carried out by voice activation and/or key stroke methods.

The present invention allows the provision of a facility wherein the user can select a maximum price he wishes to pay, and a choice of parameter value options within that price can be presented to the user.

The present invention provides advantages in any applicable communication system, but is however particularly advantageous in network arrangements including cellular radio communication systems, such as UMTS, since the inclusion of a radio link, and the impact of cellular arrangement, means the different values of communications parameters available are particularly marked and are likely to be particularly price sensitive. The present invention is similarly particularly advantageous in any communication systems with "bandwidth on demand" or similar characteristic. Also, in the case of mobile stations, the mobility aspect itself will mean that a given customer may be prepared to pay more or less, or require different level of service, dependent on his location at a particular time.

The present invention is also particularly advantageous in situations where large price variations apply to the parameter values but such parameter values are not important for certain applications. One such application would be telemetry where slow data transfer or large delay might not represent much of a problem.

A further advantage can be provided whereby the content provider can choose end limits, or limitations of allowable combinations, of the values that the user is permitted to choose. This may be done in order to maintain bottom line levels of quality, for the purposes of maintaining customer perception or expectations.

## Claims

1. A method of providing a service in a communication system, wherein the service is provided by an external content provider to a user through the communication system (100),
the method **characterized by** comprising the steps of:
providing price information associated with communication through the communication system (100) to the external content provider;
receiving from the external content provider price information related to a plurality of options related to values of at least one communications parameter to be used during the provision of service,
providing to the user as a function of price the plurality of options for selection therefrom by the user; and
receiving a selection of one of the plurality of options from the user.

2. A method according to claim 1, wherein said at least one communications parameter is related to the quality of service perceived by the user.

3. A method according to any preceding claim, wherein said service is an information service.

4. A method according to any preceding claim, wherein said communication (100) system is a radio communication system.

5. A method according to any preceding claim, wherein said at least one communications parameter includes at least one from the group of
a) bandwidth,
b) delay,
c) error rate, and
d) communications route.

6. A method according to claim 1, wherein the function of price is determined using price information input by the content provider and/or price information input by one or more further service providers forming a communications route between the content provider and the user.

7. A method according to claims 1 or 6, wherein the function of price is determined using stored price information data obtained from an earlier provision of service employing the corresponding values of said at least one communications parameter.

8. A method according to claims 1 or 6, wherein the function of price is determined in real-time using currently applicable price information.

9. A method according to any preceding claim, wherein simulation means are provided by the content provider for use by the user to carry out simulation of the service that would be provided according to an intended selection by the user.

10. A method according to claim 9, wherein availability of said simulation means is indicated to the user in association with provision of the plurality of options, and said user can acquire said simulation means via the communication system (100).

11. A method according to any preceding claim wherein, after selection by the user, a sample service corresponding to the selection is provided to the user for a limited duration.

12. An apparatus for providing a service in a communication system (100), wherein the service is provided by an external content provider to a user,
the apparatus **characterized by** comprising:
means for providing price information associated with communication through the communication system to the external content provider;
means for receiving (170) from the external content provider price information related to a plurality of options related to values of at least one communications parameter to be used during the provision of service;
means for providing to the user as a function of price the plurality of options for selection therefrom by the user; and
means for receiving a selection of one of the plurality of options from the user.

13. An apparatus according to claim 12, wherein said at least one communications parameter is related to the quality of service perceived by the user.

14. An apparatus according to claim 12 or 13, wherein said service is an information service.

15. An apparatus according to any of claims 12-14, wherein said communication system (100) is a radio communication system.

16. An apparatus according to any of claims 12-15, wherein said at least one communications parameter includes at least one from the group of
a) bandwidth,
b) delay,
c) error rate, and
d) communications route.

17. An apparatus according to claim 12, wherein the function of price is determined using price information input by the content provider and/or price information input by one or more further service providers forming a communications route between the content provider and the user.

18. An apparatus according to claims 12 or 17, wherein the function of price is determined using stored price information data obtained from an earlier provision of service employing the corresponding values of said at least one communications parameter.

19. An apparatus according to claims 12 or 17, wherein the function of price is determined in real-time using currently applicable price information.

20. An apparatus according to any of claims 12-19, wherein simulation means are provided by the content provider for use by the user to carry out simulation of the service that would be provided according to an intended selection by the user:

21. An apparatus according to claim 20, wherein availability of said simulation means is indicated to the user in association with provision of the plurality of options, and said user can acquire said simulation means via the communication system (100).

22. An apparatus according to any of claims 12-21, wherein, after selection by the user, a sample service corresponding to the selection is provided to the user for a limited duration.

## Patentansprüche

1. Verfahren zum Bereitstellen eines Dienstes in einem Kommunikationssystem, wobei der Dienst einem Benutzer von einem externen Inhaltsanbieter über das Kommunikationssystem (100) bereitgestellt wird,
wobei das Verfahren **dadurch gekennzeichnet ist, dass** es die Schritte umfasst:
Bereitstellen von zu der Kommunikation gehöriger Preisinformation über das Kommunikationssystem (100) an den externen Inhaltsanbieter;
Empfangen von Preisinformation von dem externen Inhaltsanbieter, die sich auf eine Mehrzahl von Optionen bezieht, die sich auf Werte wenigstens eines während der Bereitstellung des Dienstes verwendeten Kommunikationsparameters beziehen;
Bereitstellen der Mehrzahl von Optionen an den Benutzer als eine Funktion des Preises zur Auswahl daraus durch den Benutzer; und
Empfangen einer Auswahl einer aus der Mehrzahl von Optionen von dem Benutzer.

2. Verfahren gemäß Anspruch 1, wobei sich wenigstens ein Kommunikationsparameter auf die von dem Benutzer wahrgenommene Dienstqualität bezieht.

3. Verfahren nach einem der vorangehenden Ansprüche, wobei der Dienst ein Informationsdienst ist.

4. Verfahren nach einem der vorangehenden Ansprüche, wobei das Kommunikationssystem (100) ein Funkkommunikationssystem ist.

5. Verfahren gemäß einem der vorangehenden Ansprüche, wobei der wenigstens eine Kommunikationsparameter wenigstens ein Element der folgenden Gruppe umfasst:
a) Bandbreite,
b) Verzögerung,
c) Fehlerrate und
d) Kommunikationsweg.

6. Verfahren gemäß Anspruch 1, wobei die Funktion des Preises unter Verwendung einer Preisinformationseingabe durch den Inhaltsanbieter und / oder einer Preisinformationseingabe durch einen oder mehrere Dienstanbieter, die einen Kommunikationsweg zwischen dem Inhaltsanbieter und dem Benutzer bilden, bestimmt wird.

7. Verfahren gemäß Ansprüchen 1 oder 6, wobei die Funktion des Preises unter Verwendung gespeicherter Preisinformationsdaten bestimmt wird, die aus einer früheren Bereitstellung des Dienstes unter Einsatz der entsprechenden Werte des wenigstens einen Kommunikationsparameters erhalten wird.

8. Verfahren gemäß Ansprüchen 1 oder 6, wobei die Funktion des Preises in Echtzeit unter Verwendung aktuell anwendbarer Preisinformation bestimmt wird.

9. Verfahren gemäß einem der vorangehenden Ansprüche, wobei von dem Inhaltsanbieter Simulationsmittel bereitgestellt werden zur Verwendung durch den Benutzer, um eine Simulation des Dienstes auszuführen, der gemäß einer beabsichtigten Auswahl durch den Benutzer bereitgestellt würde.

10. Verfahren gemäß Anspruch 9, wobei eine Verfügbarkeit der Simulationsmittel dem Benutzer gemeinsam mit der Bereitstellung der Mehrzahl von Optionen angezeigt wird und wobei der Benutzer die Simulationsmittel über das Kommunikationssystem (100) erlangen kann.

11. Verfahren gemäß einem der vorangehenden Ansprüche, wobei nach Auswahl durch den Benutzer dem Benutzer für eine limitierte Dauer ein der Auswahl entsprechender Beispieldienst zur Verfügung gestellt wird.

12. Vorrichtung zum Bereitstellen eines Dienstes in einem Kommunikationssystem (100), wobei der Dienst einem Benutzer durch einen externen Inhaltsanbieter bereitgestellt wird, wobei die Vorrichtung **dadurch gekennzeichnet ist, dass** sie umfasst:
Mittel zum Bereitstellen von zu der Kommunikation gehöriger Preisinformation über das Kommunikationssystem an den externen Inhaltsanbieter,
Mittel zum Empfangen (170) von Preisinformation von dem externen Inhaltsanbieter, die sich auf eine Mehrzahl von Optionen bezieht, die sich auf Werte wenigstens eines während der Bereitstellung des Dienstes verwendeten Kommunikationsparameters beziehen;
Mittel zum Bereitstellen der Mehrzahl von Optionen als eine Funktion des Preises an den Benutzer zur Auswahl daraus durch den Benutzer; und
Mittel zum Empfangen einer Auswahl einer aus der Mehrzahl von Optionen von dem Benutzer.

13. Vorrichtung gemäß Anspruch 12, wobei sich der wenigstens eine Kommunikationsparameter auf die von dem Benutzer wahrgenommene Dienstqualität bezieht.

14. Vorrichtung gemäß Anspruch 12 oder 13, wobei der Dienst ein Informationsdienst ist.

15. Vorrichtung gemäß einem der Ansprüche 12 bis 14, wobei das Kommunikationssystem (100) ein Funkkommunikationssystem ist.

16. Vorrichtung gemäß einem der Ansprüche 12 bis 15, wobei der wenigstens eine Kommunikationsparameter wenigstens ein Element aus der folgende Gruppe umfasst:
a) Bandbreite,
b) Verzögerung,
c) Fehlerrate und
d) Kommunikationsweg.

17. Vorrichtung gemäß Anspruch 12, wobei die Funktion des Preises unter Verwendung einer Preisinformationseingabe durch den Inhaltsanbieter und / oder einer Preisinformationseingabe durch einen oder mehrere weitere Dienstanbieter, die einen Kommunikationsweg zwischen dem Inhaltsanbieter und dem Benutzer bilden, bestimmt wird.

18. Vorrichtung gemäß Ansprüchen 12 oder 17, wobei die Funktion des Preises unter Verwendung gespeicherter Preisinformationsdaten bestimmt wird, die aus einer früheren Bereitstellung des Dienstes unter Einsatz der entsprechenden Werte des wenigstens einen Kommunikationsparameters erhalten werden.

19. Vorrichtung gemäß Ansprüchen 12 oder 17, wobei die Funktion des Preises in Echtzeit unter Verwendung aktuell anwendbarer Preisinformation bestimmt wird.

20. Vorrichtung gemäß einem der Ansprüche 12 bis 19, wobei von dem Inhaltsanbieter Simulationsmittel zur Verwendung durch den Benutzer bereitgestellt werden, um eine Simulation des Dienstes auszuführen, der gemäß einer beabsichtigten Auswahl durch den Benutzer bereitgestellt würde.

21. Vorrichtung gemäß Anspruch 20, wobei die Verfügbarkeit der Simulationsmittel dem Benutzer zusammen mit der Bereitstellung der Mehrzahl von Optionen angezeigt wird und wobei der Benutzer die Simulationsmittel über das Kommunikationssystem (100) erlangen kann.

22. Vorrichtung gemäß einem der Ansprüche 12 bis 21, wobei nach Auswahl durch den Benutzer dem Benutzer für eine limitierte Dauer ein der Auswahl entsprechender Beispieldienst zur Verfügung gestellt wird.

## Revendications

1. Procédé de fourniture d'un service dans un système de communication, dans lequel le service est fourni par un fournisseur de contenu externe à un utilisateur par l'intermédiaire du système de communication (100),
le procédé étant **caractérisé en ce qu'**il comprend les étapes de :
fourniture des informations de prix associées à la communication par l'intermédiaire du système de communication (100) à un fournisseur de contenu externe ;
réception à partir des informations de prix du fournisseur de contenu externe liées à une pluralité d'options liées à des valeurs d'au moins un paramètre de communication à utiliser pendant la fourniture de service,
fourniture à l'utilisateur en fonction du prix de la pluralité d'options pour la sélection à partir de celles-ci par l'utilisateur ; et
réception d'une sélection d'une de la pluralité d'options par l'utilisateur.

2. Procédé selon la revendication 1, dans lequel ledit au moins un paramètre de communication est lié à la qualité de service perçu par l'utilisateur.

3. Procédé selon l'une quelconque des revendications précédentes, dans lequel ledit service est un service d'informations.

4. Procédé selon l'une quelconque des revendications précédentes, dans lequel ledit système de communication (100) est un système de radio communication.

5. Procédé selon l'une quelconque des revendications précédentes, dans lequel ledit au moins un paramètre de communications comprend au moins un du groupe de :
a) bande passante,
b) retard,
c) taux d'erreur, et
d) route de communications.

6. Procédé selon la revendication 1, dans lequel la fonction du prix est déterminée en utilisant les informations de prix introduites par le fournisseur de contenu et/ou les informations de prix introduites par un ou plusieurs fournisseurs de service formant une route de communications entre le fournisseur de contenu et l'utilisateur.

7. Procédé selon la revendication 1 ou 6, dans lequel la fonction du prix est déterminée en utilisant des informations de données de prix stockées obtenues à partir d'une fourniture précédente de service employant des valeurs correspondantes dudit au moins un paramètre de communications.

8. Procédé selon la revendication 1 ou 6, dans lequel la fonction du prix est déterminée en temps réel en utilisant des informations de prix actuellement applicables.

9. Procédé selon l'une quelconque des revendications précédentes, dans lequel des moyens de simulation sont fournis par le fournisseur de contenu pour l'utilisation par l'utilisateur pour réaliser la simulation du service qui serait fourni selon une sélection voulue par l'utilisateur.

10. Procédé selon la revendication 9, dans lequel la disponibilité desdits moyens de simulation est indiquée à l'utilisateur en association avec la fourniture de la pluralité d'options, et ledit utilisateur peut acquérir lesdits moyens de simulation via le système de communication (100).

11. Procédé selon l'une quelconque des revendications précédentes, dans lequel, après sélection par l'utilisateur, un service d'échantillon correspondant à la sélection est fourni à l'utilisateur pour une durée limitée.

12. Appareil pour fournir un service dans un système de communication (100), dans lequel le service est fourni par un fournisseur de contenu externe à un utilisateur, l'appareil étant **caractérisé en ce qu'**il comprend :
un moyen pour fournir des informations de prix associées à une communication par l'intermédiaire du système de communication au fournisseur de contenu externe ;
des moyens pour recevoir (170) à partir des informations de prix de fournisseur de contenu liées à une pluralité d'options liées à des valeurs d'au moins un paramètre de communication à utiliser pendant la fourniture de service ;
des moyens pour fournir à l'utilisateur en fonction du prix la pluralité des options pour la sélection à partir de celles-ci par l'utilisateur ; et
des moyens pour recevoir une sélection de la pluralité des options de l'utilisateur.

13. Appareil selon la revendication 12, dans lequel ledit au moins un paramètre de communication est lié à la qualité de service perçue par l'utilisateur.

14. Appareil selon la revendication 12 ou 13, dans lequel ledit service est un service d'informations.

15. Appareil selon l'une quelconque des revendications 12 à 14, dans lequel ledit système de communication (100) est un système de radio communication.

16. Appareil selon l'une quelconque des revendications 12 à 15, dans lequel ledit au moins un paramètre de communication comprend au moins un du groupe de :
a) bande passante
b) retard
c) taux d'erreur, et
d) route de communications.

17. Appareil selon la revendication 12, dans lequel la fonction de prix est déterminée en utilisant les informations de prix introduites par le fournisseur de contenu et/ou les informations de prix introduites par un ou plusieurs autres fournisseurs de service formant une route de communications entre le fournisseur de contenu et l'utilisateur.

18. Appareil selon la revendication 12 ou 17, dans lequel la fonction de prix est déterminée en utilisant les données d'informations de prix stockées obtenues à partir d'une fourniture précédente du service employant les valeurs correspondantes dudit au moins un paramètre de communications.

19. Appareil selon la revendication 12 ou 17, dans lequel la fonction de prix est déterminée en temps réel en utilisant des informations de prix actuellement applicables.

20. Appareil selon l'une quelconque des revendications 12 à 19, dans lequel des moyens de simulation sont fournis par le fournisseur de contenu pour l'utilisation par l'utilisateur pour réaliser la simulation du service qui serait fourni selon une sélection voulue par l'utilisateur.

21. Appareil selon la revendication 20, dans lequel la disponibilité desdits moyens de simulation est indiquée à l'utilisateur en association avec la fourniture de la pluralité d'options, et ledit utilisateur peut acquérir lesdits moyens de simulation via le système de communication (100).

22. Appareil selon l'une quelconque des revendications 12 à 21, dans lequel, après présélection par l'utilisateur, un service d'échantillonnage correspondant à la sélection est fourni à l'utilisateur pour une durée limitée.
